# EUROPÄISCHE PATENTSCHRIFT

(11) **EP 1 391 585 B1**
(45) Veröffentlichungstag und Bekanntmachung des Hinweises auf die Patenterteilung: **14.04.2010**
(21) Anmeldenummer: 03018580.5
(22) Anmeldetag: 18.08.2003
(51) Int. Cl.: F02C 6/12, F01D 17/16

(54) **Turbolader mit variabler Turbinengeometrie**
Turbocharger with variable geometry
Turbocompresseur à géométrie variable

(30) Priorität: 22.08.2002 DE 10238414
(43) Veröffentlichungstag der Anmeldung: 25.02.2004
(73) Patentinhaber: Volkswagen AG, 38436 Wolfsburg (DE)
(72) Erfinder: Baar, Roland, Dr., 38518 Gifhorn (DE)
(74) Vertreter: Kandlbinder, Markus Christian

(56) Entgegenhaltungen:
- EP-A- 1 227 221
- US-A- 4 684 319
- US-A- 4 741 666

## Beschreibung

Die Erfindung betrifft einen Turbolader mit variabler Turbinengeometrie einer Brennkraftmaschine, gemäß dem Oberbegriff des Anspruchs 1.

Aus der EP 0 226 444 A2 ist ein Abgasturbolader mit variabler Turbinengeometrie bekannt, wobei ein Verstellring radial mittels auf Stiften angeordneten Rollen gelagert ist. Hierbei bilden die Rollen eine entsprechende Rollenlagerung zwischen einem Umfang des Verstellringes und einem Gehäuse der Turbine aus.

Die EP 0 378 343 B1 beschreibt einen Abgasturbolader mit einem Verstellring, welcher über Verstellhebel eine Winkelstellung von Leitschaufeln auf einem Leitschaufelträger kollektiv verändert. Auf dem Verstellring sind Stifte angeordnet, welche sich in axialer Richtung erheben und jeweils in eine entsprechende Gleitlagerung der Verstellhebel greifen, so dass bei einem Verschwenken des Verstellhebels relativ zum Leitschaufelträger eine Stellung der Leitschaufeln relativ zu einer Strömungsrichtung verändert wird.

Ein Turbolader mit variabler Turbinengeometrie gemäss den Stand der Technik ist aus US-4,684,319 bekannt.

Die zuvor beschriebenen Lagerungen für den Stellring sowie die Verbindung zwischen Verstellring und Verstellhebel sind jedoch mechanisch aufwendig, kostenintensiv, haben einen hohen Bauraumbedarf und sind mit einer hohen Anzahl von Einzelteilen verbunden.

Der Erfindung liegt die Aufgabe zugrunde, einen Turbolader der obengenannten Art bzgl. seines mechanischen Aufbaus zu verbessern.

Diese Aufgabe wird erfindungsgemäß durch ein Turbolader der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, dass das Führungselement derart angeordnet und ausgebildet ist, dass der Verstellring zwischen dem Führungselement und dem Hebelarm des Verstellhebels axial geführt ist, wobei die Bohrung derart ausgebildet ist, dass sie in radialer Richtung eine Öffnung aufweist und das Führungselement einstückig mit dem Verstellhebel ausgebildet ist.

Dies hat den Vorteil, dass der Verstellring axial über die Verstellhebel der Leitschaufeln geführt ist, so dass keine zusätzliche Lagerung vorgesehen sein muss. Die Bauteilevielfalt ist dadurch verringert. Gleichzeitig ist eine klemmfreie Führung gewährleistet. Ein weiterer besonderer Vorteil der Erfindung liegt darin, dass die axiale Führung des Verstellringes gehäuseunabhängig ist. Dadurch ist das gesamte System verliersicher aufgebaut. Gleichzeitig kann der Verstellhebel einfach in die Bohrung des Verstellringes über die radiale Öffnung eingeschoben werden.

In einer bevorzugten Ausführungsform sind mehrere Verstellhebel mit Führungselement und jeweils zugeordneter Bohrung im Verstellring vorgesehen und in Umfangsrichtung gleichmäßig voneinander beabstandet angeordnet.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäß ausgebildeten Turbine eines erfindungsgemäßen Turboladers in Aufsicht,
- Fig. 2: einen Verstellhebel mit axialer Führung des Verstellringes in Vorderansicht,
- Fig. 3: den Verstellhebel gemäß Fig. 2 in Seitenansicht,
- Fig. 4: einen Verstellhebel ohne axiale Führung des Verstellringes in Vorderansicht und
- Fig. 5: den Verstellhebel gemäß Fig. 4 in Seitenansicht.

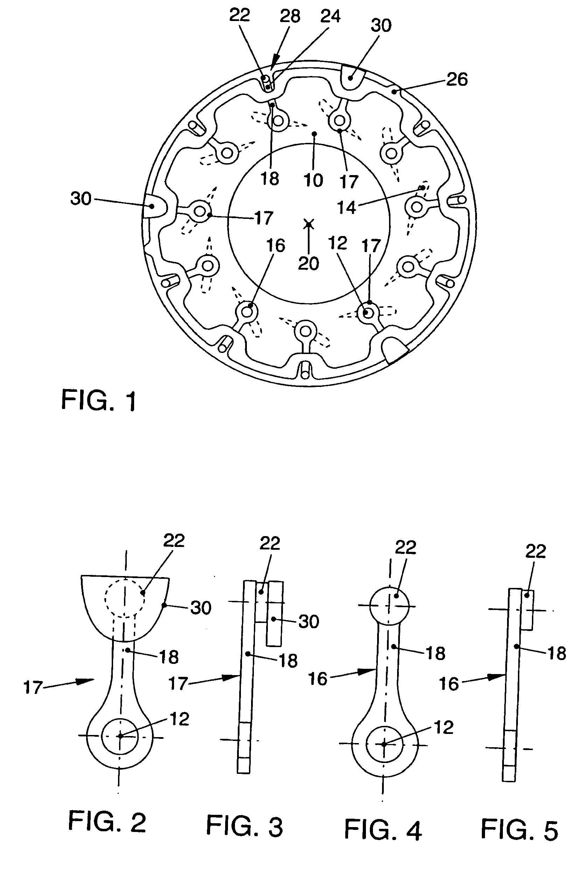

Fig. 1 zeigt schematisch eine bevorzugte Ausführungsform eines Turbinenteils eines ansonsten nicht näher dargestellten Abgasturboladers einer Brennkraftmaschine. An einem Leitschaufelträger 10 sind um eine Achse 12 schwenkbar gelagerte Leitschaufeln 14 angeordnet. Die Schwenkachsen 12 der Leitschaufeln 14 sind fest auf dem Leitschaufelträger 10 angeordnet. Jeder Leitschaufel 14 ist ein Verstellhebel 16, 17 zugeordnet, welcher drehfest mit der jeweiligen Leitschaufel 14 verbunden ist und einen in radialer Richtung weisenden Hebelarm 18 aufweist, wie aus Fig. 4 und 5 ersichtlich. Mit "radial" ist hier und nachfolgend eine Richtung bzgl. einer Drehachse 20 der Turbine gemeint. An einem von der Leitschaufel 14 abgewandten Ende des Hebelarmes 18 ist eine Erhebung 22 angeordnet, welche in eine entsprechende Bohrung 24 eines Verstellringes 26 eingreift. Die Bohrungen 24 sind dabei derart ausgebildet, dass diese in radialer Richtung eine Öffnung 28 aufweisen.

Der Verstellring 26 ist bezüglich des Leitschaufelträgers 10 schwenkbar angeordnet, wobei eine Verschwenkung des Verstellringes 26 bezüglich des Leitschaufelträgers 10 zu einem Verschwenken der Verstellhebel 16, 17 um die jeweiligen Achsen 12 bedingt. Mit den Verstellhebeln 16, 17 verschwenken auch die jeweiligen Leitschaufeln 14 um die Achsen 12. Je nach Stellung der Leitschaufeln 14 in Strömungsrichtung wird ein Druck bzw. eine Verdichterleistung geregelt. Hierdurch erfolgt mittels einer Verschwenkung des Verstellringes 26 eine Regelung von Luftmasse und Ladedruck auf einer nicht dargestellten Verdichterseite des Abgasturboladers bei verschiedenen Betriebspunkten einer Brennkraftmaschine. Das Verschwenken des Verstellringes 26 erfolgt mit einer externen, nicht dargestellten Stelleinrichtung.

Erfindungsgemäß sind drei der Verstellhebel 17 wie in Fig. 2 und 3 dargestellt und damit anders als die übrigen in Fig. 4 und 5 gezeigten Verstellhebel 16 ausgebildet. Bei den Verstellhebeln 17 ist an einem freien Ende der durch die Bohrung 24 greifenden Erhebung 22 ein Führungselement 30 angeordnet, welches sich bzgl. der Verstellhebel 17 auf der gegenüberliegenden Seite des Verstellringes 26 befindet. Das Führungselement 30 ist dabei derart ausgebildet und die Verstellhebel 17 sind derart in Umfangsrichtung verteilt angeordnet, dass der Verstellring 26 zwischen den Führungselementen 30 und den jeweiligen Hebelarmen 18 der Verstellhebel 17 axial geführt ist. Die Erfindung ist nicht auf die dargestellten drei Verstellhebel 17 mit Führungselement 30 begrenzt. Es können auch mehr oder alle Verstellhebel 16, 17 mit einem Führungselement ausgestattet sein. Das Führungselement 30 ist beispielsweise einstückig zusammen mit der Erhebung 22 mit dem Verstellhebel 17 ausgebildet.

In radialer Richtung erfolgt die Führung des Verstellringes 26 zwischen einem Umfang des Verstellringes 26 und einem nicht dargestellten Gehäuse. Bei einer Montage dieser erfindungsgemäßen Anordnung wird die drehfeste Verbindung zwischen den Leitschaufeln und einem jeweiligen Verstellhebel 16, 17 in einem letzten Arbeitsschritt hergestellt. Das ganze System ist damit verliersicher aufgebaut.

## Patentansprüche

1. Turbolader mit variabler Turbinengeometrie einer Brennkraftmaschine, insbesondere eines Kraftfahrzeuges, mit an einem Leitschaufelträger (10) schwenkbar angeordneten Leitschaufeln (14) einer Turbine, denen jeweils ein Verstellhebel (16) mit Hebelarm (18) zugeordnet ist, und mit einem Verstellring (26), welcher mit einem freien Ende des Hebelarms (18) zusammen wirkt und durch Drehung relativ zum Leitschaufelträger (10) eine Winkelstellung der Leitschaufeln (14) relativ zu einer Strömungsrichtung kollektiv für alle Leitschaufeln (14) verstellt, wobei wenigstens ein Verstellhebel (17) derart ausgebildet ist, dass dieser an dem freien, mit dem Verstellring (26) zusammenwirkenden Ende des Hebelarms (18) eine Erhebung (22) aufweist, welche durch eine Bohrung (24) in dem Verstellring hindurch ragt, wobei an der Erhebung (22) ein Führungselement (30) befestigt ist, welches an einer bzgl. der Verstellhebel (16, 17) gegenüberliegenden Seite des Verstellringes (26) angeordnet ist, wobei das Führungselement (30) derart angeordnet und ausgebildet ist, dass der Verstellring (26) zwischen dem Führungselement (30) und dem Hebelarm (18) des Verstellhebels (17) axial geführt ist, **dadurch gekennzeichnet, dass** die Bohrung (24) derart ausgebildet ist, dass sie in radialer Richtung eine Öffnung (28) aufweist und das Führungselement (30) einstückig mit dem Verstellhebel (17) ausgebildet ist.

2. Turbolader nach wenigstens einem der vorhergehenden Ansprüche, **dadurch gekennzeichnet, dass** mehrere Verstellhebel (17) mit Führungselement (30) und jeweils zugeordneter Bohrung (24) im Verstellring (26) vorgesehen und in Umfangsrichtung gleichmäßig voneinander beabstandet angeordnet sind.

## Claims

1. Turbocharger with variable turbine geometry of an internal combustion engine, in particular of a motor vehicle, having guide blades (14), pivotably arranged on a guide blade carrier (10), of a turbine, which guide blades (14) are assigned in each case one adjusting lever (16) with a lever arm (18), and having an adjusting ring (26) which interacts with a free end of the lever arm (18) and, by rotating relative to the guide blade carrier (10), adjusts an angular position of the guide blades (14) relative to a flow direction collectively for all the guide blades (14), with at least one adjusting lever (17) being designed so as to have an elevation (22) at the free end, which interacts with the adjusting ring (26), of the lever arm (18), which elevation (22) projects through a bore (24) in the adjusting ring, with a guide element (30) being fastened to the elevation (22), which guide element (30) is arranged on an opposite side of the adjusting ring (26) in relation to the adjusting lever (16, 17), with the guide element (30) being arranged and designed such that the adjusting ring (26) is guided axially between the guide element (30) and the lever arm (18) of the adjusting lever (17), **characterized in that** the bore (24) is designed so as to have an opening (28) in the radial direction and the guide element (30) is formed in one piece with the adjusting lever (17).

2. Turbocharger according to Claim 1, **characterized in that** a plurality of adjusting levers (17) with guide elements (30) and respectively associated bores (24) in the adjusting ring (26) are provided and are arranged spaced apart uniformly from one another in the circumferential direction.

## Revendications

1. Turbocompresseur à géométrie de turbine variable pour un moteur à combustion interne, notamment d'un véhicule automobile, comprenant des aubes directrices (14) d'une turbine disposées de manière pivotante sur un support d'aubes directrices (10), auxquelles est à chaque fois associé un levier de commande (16) avec un bras de levier (18), et une bague de commande (26), qui coopère avec une extrémité libre du bras de levier (18) et qui commande, par rotation par rapport au support d'aubes directrices (10), une position angulaire des aubes directrices (14) par rapport à un sens d'écoulement de manière collective pour toutes les aubes directrices (14), au moins un levier de commande (17) étant réalisé de telle sorte qu'il présente, à l'extrémité libre du bras de levier (18) coopérant avec la bague de commande (26), un rehaussement (22) qui pénètre dans la bague de commande à travers un alésage (24), un élément de guidage (30) étant fixé sur le rehaussement (22), lequel est disposé sur un côté de la bague de commande (26) opposé au levier de commande (16, 17), l'élément de guidage (30) étant disposé et réalisé de telle sorte que la bague de commande (26) soit guidée axialement entre l'élément de guidage (30) et le bras de levier (18) du levier de commande (17), **caractérisé en ce que** l'alésage (24) est réalisé de telle sorte qu'il présente, dans la direction radiale, une ouverture (28) et que l'élément de guidage (30) soit réalisé d'une seule pièce avec le levier de commande (17).

2. Turbocompresseur selon la revendication 1, **caractérisé en ce que** plusieurs leviers de commande (17) avec élément de guidage (30) et alésage associé respectif (24) sont prévus dans la bague de commande (26), et sont disposés à distance régulière les uns des autres dans la direction périphérique.
